# EUROPÄISCHE PATENTSCHRIFT

(11) **EP 0 997 633 B1**
(45) Veröffentlichungstag und Bekanntmachung des Hinweises auf die Patenterteilung: **09.01.2002**
(21) Anmeldenummer: 99120125.2
(22) Anmeldetag: 08.10.1999
(51) Int. Cl.: F02M 37/10, F02M 37/02

(54) **Kraftstoff-Fördersystem**
Fuel feed system
Système d'alimentation en carburant

(30) Priorität: 28.10.1998 DE 19849718
(43) Veröffentlichungstag der Anmeldung: 03.05.2000
(73) Patentinhaber: Bayerische Motoren Werke Aktiengesellschaft, 80788 München (DE)
(72) Erfinder: Treml, Christian, 81475 München (DE); Lösch, Simon, 85456 Wartenberg (DE)

(56) Entgegenhaltungen:
- EP-A- 0 771 946
- EP-A- 0 780 567
- EP-A- 0 780 568
- WO-A-96/05423
- US-A- 5 263 456

## Beschreibung

Die Erfindung betrifft ein Kraftstoff-Fördersystem gemäß dem Oberbegriff des Anspruchs 1. Insbesondere betrifft die Erfindung ein Kraftstoff-Fördersystem für Dieselmotoren mit Direkteinspritzung.

Bei Dieselmotoren mit Direkteinspritzung benötigen die Einspritzpumpen aufgrund des hohen Druckes gegenüber bisherigen Wirbelkammermotoren mindestens die doppelte Umwälzmenge an von der Kraftstoffpumpe zugeführten Kraftstoff. Soll die Kraftstoffpumpe zusätzlich eine oder mehrere Saugstrahlpumpen bei einem Mehrkammer-Kraftstoffbehälter mit Kraftstoff versorgen, müßte die Kraftstoffpumpe mit einer entsprechend hohen Leistung ausgelegt werden. Eine solche Kraftstoffpumpe ist in bezug auf die Stromaufnahme und den Platzbedarf problematisch.

Beispielsweise aus der WO 96/05423 ist ein Kraftstoff-Fördersystem für einen Dieselmotor bekannt, bei dem ein Teil einer aus einer Einspritzpumpe strömenden Rücklaufmenge einer zur Einspritzpumpe geförderten Vorlaufmenge über eine entsprechende Rückfaufleitung hinzugeführt wird. Die restliche Rücklaufmenge dient zum Antrieb einer in einem Kraftstoffbehälter befindlichen Saugstrahlpumpe. Die zur Vorlaufmenge hinzugeförderte Rücklaufmenge ist so bemessen, daß sich nur eine geringe Temperaturerhöhung ergibt. Gleichzeitig wird durch die Ableitung einer vorbestimmten Rücklaufmenge die Wärmezufuhr an heißem Kraftstoff in den Kraftstoffbehälter verringert. Jedoch ist zur Förderung der Rücklaufmenge zur Vorlaufmenge der Einsatz einer Pumpe erforderlich.

Weiteren bekannten Stand der Technik bildet die US 5,263,456. Beim darin gezeigten Kraftstoff-Fördersystem ist in einer zu einem Kfz-Verbrennungsmotor führenden Vorlaufleitung wie üblich eine Förderpumpe vorgesehen, und es ist eine im Kraftstoffbehälter mündende Rücklaufleitung vorgesehen, die über einen dort sog. Bypass mit der Vorlaufleitung (stromab der Förderpumpe) verbunden ist. Sowohl im Bypass als auch in der Rücklaufleitung stromab einer Verzweigungsstelle, von welcher der Bypass von der Rücklaufleitung abzweigt, sind Drosselvorrichtungen vorgesehen. Wenn bei niedrigen Temperaturen die Förderpumpe lediglich einen relativ geringen Kraftstoffdruck bereitstellen kann, so wird über den Bypass die dem Motor zur Verfügung gestellte Kraftstoffmenge erhöht, wobei insbesondere eine erwünschte Erwärmung des Kraftstoffs erfolgt, während bei höheren Temperaturen Kraftstoff über den Bypass in umgekehrter Richtung direkt von der Vorlaufleitung in die Rücklaufleitung gelangen kann.

Grundsätzlich kann es problematisch sein, einer Kraftstoff-Einspritzpumpe eines Kfz-Verbrennungsmotors unter allen möglichen Randbedingungen und Betriebszuständen die jeweils erforderliche bzw. benötigte Kraftstoffmenge mit ausreichendem Druck bereitzustellen. Verstärkt wird diese Problematik noch, wenn mit der Kraftstoff-Förderpumpe bzw. mit einem Teil von deren Fördermenge auch noch eine Saugstrahlpumpe betrieben werden soll, mit Hilfe derer (in an sich bekannter Weise) Kraftstoff aus einer Kammer des Kraftstoffbehälters in andere Kammer desselben gefördert werden soll, in welcher sich die besagte Förderpumpe befindet.

Aufgabe der Erfindung ist es, ein Kraftstoff-Fördersystem aufzuzeigen, das den geschilderten Anforderungen gerecht wird, wobei nicht nur eine Erhöhung der Vorlaufmenge über eine Rücklaufmenge mit einfachen Maßnahmen erreicht, sondern zusätzlich auch eine wirkungsvolle System-Entlüftung ermöglicht werden soll.

Diese Aufgabe wird bei einem erfindungsgemäßen Kraftstoff-Fördersystem durch die Merkmale des Anspruchs 1 gelöst.

Zunächst sind bei dem erfindungsgemäßen Kraftstoff-Fördersystem jeweils Drosseleinrichtungen in der zum Vorlauf führenden und in der zum Kraftstoffbehälter führenden Rücklaufleitung vorgesehen, die bei geeigneter Abstimmung bzw. Dimensionierung eine gewünschte Vorlaufmengen-Erhöhung durch die unverzichtbare Rücklaufmenge ermöglichen. Bevorzugt erfolgt die durch die Drosseleinrichtungen bewirkte Drosselung solchermaßen, daß die vor einer Verzweigungsstelle der Rücklaufleitungen herrschenden zulässigen Staudrücke nicht überschritten werden. Durch diese Maßnahme wird in einfacher Weise ein sicherer Betrieb der Einspritzpumpe oder Hochdruckpumpe des Motors gewährleistet. Ferner wird durch die erfindungsgemäße Drosselung erreicht, daß keine zusätzliche Förderpumpe wie beim erstgenannten bekannten Stand der Technik in der Vorlaufleitung erforderlich ist.

Bei dem erfindungsgemäßen Kraftstoff-Fördersystem ist somit die vom Rücklauf dem Vorlauf zugeführte Kraftstoffmenge so ausgewählt, daß bei einem Einsatz des Kraftstoff-Fördersystems für einen Dieselmotor mit einem Einspritzsystem die verwendete Kraftstoffpumpe nur die Förderleistung wie für einen Wirbelkammermotor erbringen muß und daß die darüber hinausgehende Kraftstoffmenge aus der Rücklaufmenge bereitgestellt wird.

Erfindungsgemäß ist zusätzlich in der zur Vorlaufleitung führenden Rücklaufleitung ein Rückschlagventil eingebaut, das so ausgelegt ist, daß bei einem Erststart eines Motors und nach einer vollständigen Entleerung des Kraftstoffbehälters eine einfache Entlüftung möglich ist. Dies wird in einfacher Weise dadurch erreicht, daß die in der Förderleitung befindliche Luft zunächst über das offene Rückschlagventil und die sich daran anschließende Rücklaufleitung entweichen kann und daß durch ein Einströmen von Kraftstoff in die Rücklaufleitung das Rückschlagventil selbstätig schließt, wobei das Rückschlagventil selbstätig durch die bei einem laufenden Motor von der Einspritzpumpe strömende Rücklaufmenge wieder geöffnet wird.

Im übrigen sind bevorzugt auch die Drosseleinrichtungen in den Rücklaufleitungen so eingestellt, daß durch das erfindungsgemäße Kraftstoff-Fördersystem eine Entlüftung im Kreislauf des Kraftstoff-Fördersystems vor bzw. bei einem Erststart des Motors und nach einer vollständigen Entleerung des Kraftstoffbehälters beschleunigt wird.

Das Rückschlagventil besteht in einer vorteilhaften Ausführungsform aus einem in der Rücklaufleitung beweglichen Ventilschließkörper, dessen Querschnittsfläche kleiner ist als die Querschnittsfläche der Rücklaufleitung, so daß der von dem Ventilschließkörper nicht abgedeckte Restquerschnitt, durch den Kraftstoff fließen kann, einem nachfolgend ausgebildetem Querschnitt einer Drossel entspricht.

Im folgenden wird die Erfindung anhand eines bevorzugten Ausführungsbeispieles anhand der Zeichnungen weiter beschrieben. Dabei zeigen:
- Figur 1: eine Prinzipdarstellung eines erfindungsgemäßen Kraftstoff-Fördersystems,
- Figur 2: einen Längsschnitt durch ein H-förmiges Kunststoffbauteil, in dem die Verbindung einer Rücklaufleitung mit einer Vorlaufleitung sowie die Anordnung einer Drossel und eines Rückschlagventils integriert ist und
- Figur 3: eine Querschnittsansicht längs der Linie I-I in der Figur 2, die die Anordnung eines Ventilschließkörpers des Rückschlagventils in der Verbindungsleitung zeigt.

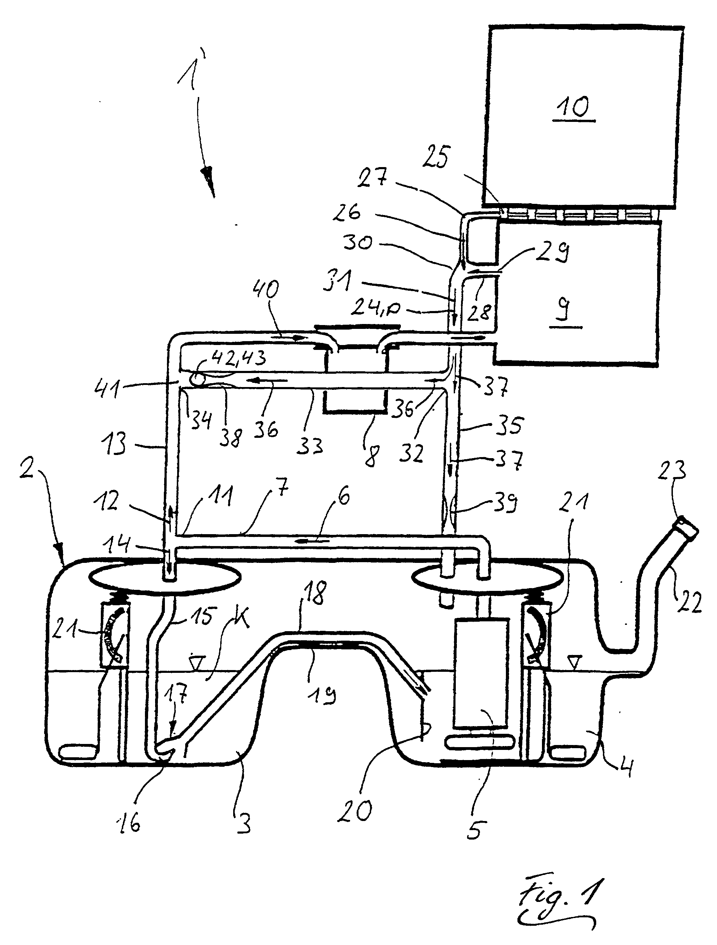

Die Figur 1 zeigt ein Kraftstoff-Fördersystem 1 für ein nicht dargestelltes Kraftfahrzeug. Das Kraftstoff-Fördersystem 1 besteht aus einem Kraftstoffbehälter 2, der zwei Kammern 3 und 4 aufweist. In der einen Kammer 4 ist eine Förderpumpe 5 angeordnet, die eine mit einem Pfeil gekennzeichnete Kraftstoff-Fördermenge 6 über eine Förderleitung 7 zu einem Filter 8 und von da zu einer Einspritzpumpe oder Hochdruckpumpe 9 eines Motors 10 fördert.

Die Förderleitung 7 weist eine Verzweigungsstelle 11 auf, an der die Kraftstoff-Fördermenge 6 in eine mit einem Pfeil gekennzeichnete Vorlaufmenge 12 und in eine mit einem Pfeil gekennzeichnete Abzweig- oder Treibmenge 14 aufgeteilt wird. Die Vorlaufmenge 12 fließt über eine Vorlaufleitung 13 zum Filter 8. Über die Kraftstoff-Treibmenge 14 wird eine am Ende 16 einer Treibleitung 15 ausgebildete Saugstrahlpumpe 17 angetrieben.

Über eine Förderleitung 18 wird der in der Kammer 3 befindliche Kraftstoff K in die über einen Sattel 19 abgetrennte Kammer 4 gefördert. Der Kraftstoff K fließt dann beispielsweise direkt in einen Schwalltopf 20. Im Schwalltopf 20 ist die Förderpumpe 5 sowie eine Kraftstoff-Anzeigevorrichtung 21 angeordnet. An der Kammer 4 ist ferner ein Einfüllrohr 22 ausgebildet, das mit einem Deckel 23 verschließbar ist.

Vom Motor 10 fließt eine überschüssige mit einem Pfeil gekennzeichnete Rücklaufmenge 24 in Richtung des Kraftstoffbehälters 2. Die Rücklauf-Gesamtmenge 24 enthält eine an den Düsen 25 der Einspritzpumpe 9 austretende Leckmenge 26, die durch eine Leckleitung 27 strömt. Ferner fließt durch eine Leitung 28 eine mit einem Pfeil gekennzeichnete Rücklauf-Teilmenge 29 aus der Einspritzpumpe 9. Die Leckmenge 26 und die von der Einspritzpumpe 9 kommende Rücklauf-Teilmenge 29 vereinigen sich an einer Verzweigungsstelle 30 zu der Rücklauf-Gesamtmenge 24, die durch eine Rücklaufleitung 31 in Richtung des Kraftstoffbehälters 2 fließt.

Die Rücklaufleitung 31 verzweigt sich an einer Verzweigungsstelle 32 in eine Rücklaufleitung 33 und eine Rücklaufleitung 35. Die Rücklaufleitung 33 ist an einer Verzweigungsstelle 34 mit der Vorlaufleitung 13 verbunden. Durch die mit der Vorlaufleitung 13 verbundene Rücklaufleitung 33 fließt eine mit einem Pfeil gekennzeichnete Rücklauf-Abzweigmenge 36. Eine mit einem Pfeil gekennzeichnete Rücklauf-Restmenge 37 strömt durch die zum Kraftstoffbehälter 2 führende Rücklaufleitung 35.

Sowohl in der Rücklaufleitung 33 als auch in der Rücklaufleitung 35 ist jeweils eine Drosselvorrichtung 38, 39 vorgesehen. Durch die Drosselvorrichtungen 38, 39 wird unter anderem ein vor der Verzweigungsstelle 32 bzw. in der Rücklaufleitung 31 herrschender Staudruck p der Rücklauf-Gesamtmenge 24 eingestellt.

Durch die Drosselvorrichtungen 38 und 39 und ggf. weitere Drosselvorrichtungen ist jeweils ein zulässiger Staudruck in der Leckleitung 27 und in der Leitung 28 einstellbar. Dabei kann beispielsweise ein einstellbarer Staudruck in der Leckleitung 27 maximal zwischen 0 und 1 bar und in der Leitung 28 ebenfalls maximal bei 0 bis 1 bar liegen. Über die Drosselvorrichtungen 38 und 39 und sonstige geeignete Maßnahmen, wie beispielsweise entsprechend große Querschnitte der Rücklaufleitungen 33 und 35 wird die für den Betrieb der Einspritzpumpe 9 und des Motors 10 benötigte von der Rücklauf-Gesamtmenge 24 abgeführte Rücklauf-Abzweigmenge 36 eingestellt.

Desweiteren ist nach der Drosselvorrichtung 38 und vor einer Einmündungsöffnung 41 der Rücklaufleitung 33 in die Vorlaufleitung 13 ein Rückschlagventil 42 oder dergleichen eingebaut.

Schon durch die Einstellung der Drosselvorrichtungen 38, 39 wird eine Entlüftung des Kreislaufes des Kraftstoff-Fördersystems 1, 1' vor bzw. bei einem Motor Erststart und nach einer vollständigen Entleerung des Kraftstoffbehälters 2 erleichtert bzw. beschleunigt. Durch die Anordnung eines Rückschlagventiles 42 ergibt sich eine noch schnellere Entlüftung des Kreislaufes in dem Kraftstoff-Fördersystem 1' bei den genannten beiden Betriebszuständen.

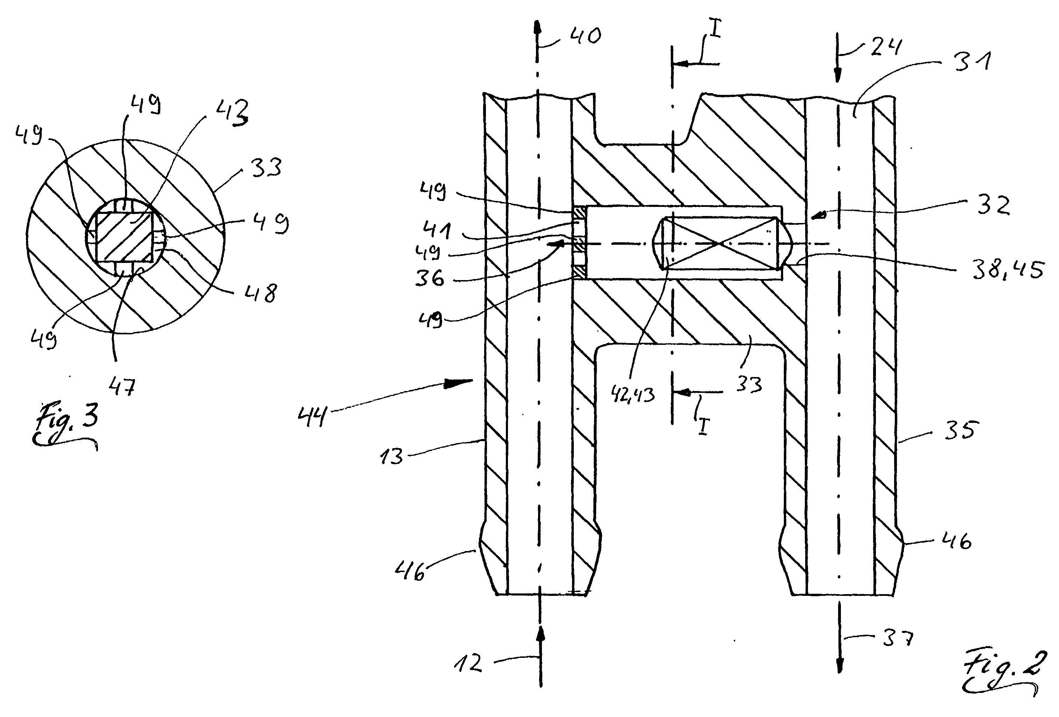

Das Rückschlagventil 42 ist zu diesem Zweck so ausgelegt, daß bei einem Motor- Erststart oder nach einer Leerfahrt des Kraftstoffbehälters 2, d. h. nach einem vollständigen Entleeren des Kraftstoffbehälters, das Rückschlagventil 42 so lange offen ist, bis Kraftstoff über die Einmündungsöffnung 41 in die Rücklaufleitung 33 fließt. Bis zu diesem Zeitpunkt kann die Luft aus der Vorlaufleitung 13 zusätzlich über die Rücklaufleitung 33 entweichen. Steigt beim Entlüftungsvorgang der Kraftstoff weiter an, so schließt ein Ventilschließkörper 43 des Rückschlagventiles 42 den Durchfluß von Kraftstoff durch die Rücklaufleitung 33 in Richtung des Kraftstoffbehälters 2. Nach dem Anspringen des Motors 10 drückt die in die Rücklaufleitung 33 strömende Rücklauf-Abzweigmenge 36 den Ventilschließkörper 43 aus seiner in der Figur 2 gezeigten Schließstellung, so daß die Rücklauf-Abzweigmenge 36 in die Vorlaufleitung 13 strömen kann und dort mit der Vorlaufmenge 12 eine Vorlauf-Gesamtmenge 40 bildet.

Die Figur 2 zeigt einen Längsschnitt durch ein teilweise dargestelltes H-förmiges Verbindungsstück 44 aus einem kraftstoffresistenten Kunststoff, bei dem in einem einzigen Bauteil die Verbindung zwischen der Vorlaufleitung 13 und der Rücklaufleitung 35 über eine Rücklaufleitung 33 ausgebildet ist. Die Drosselvorrichtung 38 in der Rücklaufleitung 33 ist durch eine Querschnittsverringerung einer Einströmöffnung 45 dargestellt. In der Rücklaufleitung 33 ist beweglich ein Ventilschließkörper 43 des Rückschlagventils 42 angeordnet. An den vier nur teilweise dargestellten Enden des Verbindungsstückes 44 sind Befestigungsmöglichkeiten für Anschlußleitungen oder Schläuche vorgesehen.

In der Schnittansicht der Figur 3 sind die Durchflußverhältnisse zwischen dem Ventilschließkörper 43 und einer Innenwand 47 der Rücklaufleitung 33 ersichtlich. Die zwischen dem Ventilschließkörper 43 mit dem rechteckförmigen Querschnitt und der Innenwand 47 verbleibende Durchflußöffnung 48 ist mindestens so groß wie die Fläche der Einströmöffnung 45 der Drosselvorrichtung 38. In der Einmündungsöffnung 41 sind Anschläge 49 vorgesehen, die beispielsweise in Form von Anschlagsrippen ausgebildet sind. Die Zwischenräume zwischen den Anschlagsrippen 49 sind so bemessen, daß bei einer Anlage des Ventilschließkörpers 43 an den Anschlagsrippen 49 die vorgesehene Rücklauf-Abzweigmenge 36 durch die Zwischenräume fließen kann.

## Patentansprüche

1. Kraftstoff-Fördersystem für Kraftfahrzeuge, bestehend aus einem Kraftstoffbehälter (2) mit mindestens zwei Kammern (3,4), einer Förderpumpe (5) in einer der Kammern (4), von welcher eine Vorlaufleitung (13) zu einer einen Motor (10) versorgenden Einspritzpumpe (9) führt, und mit einer Förderleitung (18), die sich an je eine Saugstrahlpumpe (17) in den übrigen Kammern anschließt, wobei der Antrieb der jeweiligen Saugstrahlpumpe (17) durch eine von der Vorlaufleitung (13) abgezweigte Kraftstoffmenge erfolgt, ferner mit einer Rücklaufleitung (35) zwischen dem Motor (10) und dem Kraftstoffbehälter (2), in der eine Verzweigungsstelle (32) vorgesehen ist, von der zum einen eine mit der Vorlaufleitung (13) verbundene Rücklaufleitung (33) und zum anderen eine zum Kraftstoffbehälter (2) führende Rücklaufleitung (35) abzweigt,
**dadurch gekennzeichnet, dass** in den beiden Rücklaufleitungen (33, 35) stromab der Verzweigungsstelle (32) mittels Drosselvorrichtungen (38, 39) jeweils eine Drosselung des in diesen Rücklaufleitungen (33, 35) durchströmenden Kraftstoffes erfolgt, und dass ein Rückschlagventil (42) zusätzlich zur Drosselvorrichtung (38) in der in der Vorlaufleitung (13) mündenden Rücklaufleitung (33) eingebaut ist.

2. Kraftstoff-Fördersystem nach Anspruch 1,
**dadurch gekennzeichnet, dass** vor der Verzweigungsstelle (32) der Rücklaufleitungen (33, 35) ein für die Einspritzpumpe (9) zulässiger Staudruck (p) nicht überschritten wird, wobei sich die von der Einspritzpumpe (9) benötigte Vorlauf-Gesamtmenge (40) mit dem für die Einspritzpumpe (9) erforderlichen Druck aus der Vorlaufmenge (12) und einer Rücklaufmenge (36) ergibt, die durch die in der Vorlaufleitung (13) mündenden Rücklaufleitung (33) geführt wird, und dass die Drosselung der Kraftstoffmenge in den Rücklaufleitungen (33, 35) über die Drosselvorrichtungen (38, 39) so eingestellt ist, daß eine Entlüftung in dem Kreislauf des Kraftstoff-Fördersystems (1, 1') vor bzw. beim Motor-Erststart und nach einer vollständigen Entleerung des Kraftstoffbehälters (2) beschleunigt ist.

3. Kraftstoff-Fördersystem nach Anspruch 1 oder 2,
**dadurch gekennzeichnet, daß** das Rückschlagventil (42) einen über eine vorbestimmte Strecke beweglichen Ventilschließkörper (43) aufweist.

4. Kraftstoff-Fördersystem nach Anspruch 3,
**dadurch gekennzeichnet, daß** der Ventilschließkörper (43) eine Klappe oder einen Kugel ist oder als ein stabförmiges Bauteil ausgebildet ist.

5. Kraftstoff-Fördersystem nach Anspruch 4,
**dadurch gekennzeichnet, daß** der stabförmige Ventilschließkörper (43) einen kleineren Querschnitt als der Leitungsquerschnitt der Rücklaufleitung (33) aufweist, wobei der verbleibende Restquerschnitt zwischen dem Ventilschließkörper (43) und einer Innenwand (47) der Rücklaufleitung (33) einem Querschnitt einer Einströmöffnung (45) der Drosselvorrichtung (38) entspricht.

6. Kraftstoff-Fördersystem nach Anspruch 5,
**dadurch gekennzeichnet, daß** der Ventilschließkörper (43) durch eine Feder gegen die Einströmöffnung (45) gedrückt ist.

## Claims

1. A fuel feed system for motor vehicles, comprising a fuel container (2) with at least two chambers (3, 4), a feed pump (5) in one of the chambers (4), from which a supply line (13) leads to an injection pump (9) supplying a motor (10), and with a supply line (18), which connects with at least one sucking jet pump (17) in the other chambers, whereby the drive to the individual sucking jet pumps (17) is effected by a quantity of fuel branched off from the supply line (13), further with a return line (35) between the motor (10) and the fuel container (2), in which a branching position (32) is provided, from which branches on the one hand a return line (33) connected to the supply line (13) and on the other hand a return line (35) to the fuel container (2),
**characterised in that** in the two return lines (33, 35) downstream from the branching position (32) a throttling of the fuel flowing through these return lines (33, 35) is effected by means of throttle devices (38, 39), and that a non-return valve (42) is built in to the return line (33) opening into the supply line (13).

2. A fuel feed system according to claim 1,
**characterised in that** before the branching position (32) of the return lines (33, 35) a permissible pressure head (p) for the injection pump (9) is not exceeded, whereby the total supply quantity (40) required by the injection pump (9) with the pressure required by the injection pump (9) results from the supply quantity (12) and a return quantity (36), which is fed by the return line (33) opening into the supply line (13), and that the throttling of the fuel quantity in the return lines (33, 35) is adjusted by the throttle devices (38, 39) such that the ventilation of the circulation of the fuel feed system (1, 1') before or during the first starting of the motor and following complete emptying of the fuel container (2) is accelerated.

3. A fuel feed system according to claim 1 or claim 2,
**characterised in that** the non-return valve (42) has a valve closing element (43) movable over a predefined path.

4. A fuel feed system according to claim 3,
**characterised in that** the valve closing element (43) is a flap or a ball or is configured as a rod shaped component.

5. A fuel feed system according to claim 4,
**characterised in that** the rod shaped valve closing element (43) has a smaller cross section than the cross section of the return line (33), whereby the remaining cross section between the valve closing element (43) and the inner wall (47) of the return line (33) corresponds to the cross section of the inflow opening of the throttle device (38).

6. A fuel feed system according to claim 5,
**characterised in that** the valve closing element (43) is pressed by a spring against the inflow opening (45).

## Revendications

1. Système d'alimentation en carburant de véhicule composé d'un réservoir à carburant (2) avec au moins deux chambres (3,4), une pompe d'alimentation (5) placée dans l'une des chambres (4) et en sortie de celle-ci une conduite d'alimentation (13) reliée à une pompe d'injection (9) alimentant un moteur (10), avec une conduite d'alimentation (18) reliée à une pompe à jet aspirante (17) dans les autres chambres, l'entraînement de la pompe à jet aspirante (17) respective étant assuré par une quantité de carburant dérivée de la conduite d'alimentaiton (13) ainsi qu'en outre avec une conduite de retour (35) entre le moteur (10) et le réservoir à carburant (2), et qui comporte une dérivation (32) d'où part une conduite de retour (33) reliée à la conduite d'alimentation (13) ainsi qu'une conduite de retour (35) reliée au réservoir à carburant (2),
**caractérisé en ce que**
dans les deux conduites de retour (33, 35) en aval du point de jonction (32), des dispositifs d'étranglement (38, 39) réalisent chaque fois un moyen d'étranglement du carburant qui traverse les conduites de retour (33, 35), et un clapet anti-retour (42) est en outre monté en plus du dispositif d'étranglement (38), dans la conduite de retour (33) qui débouche dans la conduite d'alimentation (13).

2. Système d'alimentation en carburant selon la revendication 1,
**caractérisé en ce qu'**
- en amont du point de dérivation (32) des conduites de retour (33, 35) on ne dépasse pas une pression de retenue (p) autorisée pour la pompe d'injection (9), et la quantité totale d'alimentation (40) nécessaire à la pompe d'injection (9) à la pression nécessaire à la pompe d'injection (9) se compose de la quantité d'alimentation (12) et d'une quantité de retour(36) qui passe par la conduite de retour (33) débouchant dans la conduite d'alimentation (13), et
- l'étranglement de la quantité de carburant dans les conduites de retour (33, 35) est réglé par les dispositifs d'étranglement (38, 39) pour accélérer la purge du circuit du système d'alimentation en carburant (1, 1') avant ou au premier démarrage du moteur et après une évacuation complète du réservoir à carburant (2).

3. Système d'alimentation en carburant selon l'une quelconque des revendications 1 ou 2
**caractérisé en ce que**
le clapet anti-retour (42) comporte un organe d'obturation (43) mobile sur une distance prédéfinie.

4. Système d'alimentation en carburant selon la revendication 3,
**caractérisé en ce que**
l'organe d'obturation (43) est un clapet ou une bille ou une pièce en forme de tige.

5. Système d'alimentation en carburant selon la revendication 4,
**caractérisé en ce que**
l'organe d'obturation (43) en forme de tige a une section plus petite que la section de la conduite de retour (33), et la section résiduelle entre l'organe d'obturation (43) et une paroi intérieure (47) de la conduite de retour (33) correspond à une section d'un orifice d'entrée (45) du dispositif d'étranglement (38).

6. Système d'alimentation en carburant selon la revendication 5,
**caractérisé en ce que**
l'organe d'obturation de soupape (43) est poussé par un ressort contre l'orifice d'entrée (45).
